# EUROPEAN PATENT SPECIFICATION

(11) **EP 1 088 651 B1**
(45) Date of publication and mention of the grant of the patent: **08.03.2006**
(21) Application number: 00121606.8
(22) Date of filing: 02.10.2000
(51) Int. Cl.: B32B 17/10

(54) **Fire-protection glass panel with a heat shielding characteristic**
Feuerhemmendes Glaspaneel mit Hitzeschutzmerkmalen
Panneau de verre protecteur contre le feu ayant des caractéristiques de protection thermique

(30) Priority: 30.09.1999 JP 27802399
(43) Date of publication of application: 04.04.2001
(73) Proprietor: NIPPON ELECTRIC GLASS CO., LTD, Otsu-shi, Shiga 520-8639 (JP)
(72) Inventor: Hashibe, Yoshio, c/o Nippon Electric Glass Co.,Ltd, Otsu-shi, Shiga 520-8639 (JP); Sakamoto, Akihiko, Nippon Electric Glass Co.,Ltd, Otsu-shi, Shiga 520-8639 (JP)
(74) Representative: Tetzner, Thomas

(56) References cited:
- EP-A- 0 389 291
- FR-A- 2 293 566
- GB-A- 2 122 919
- GB-A- 2 264 260
- US-A- 5 632 835

## Description

### Background of the Invention:

The present invention relates to a fire-protection glass product such as a glass panel for use as a building material to prevent spread and expansion of fire and to assure the safety during escape from fire and, in particular, to a fire-protection glass product having a heat shielding characteristic.

As a glass product called a fire-protection glass, a wire glass, a tempered glass, and a crystallized glass are known and already put into practical use. Such fire-protection glass has heat resistance and not only serves to shield flames and smokes upon occurrence of fire but also serves as a transparent window for assuring an inside view. However, the fireproof glass can not substantially attenuate heat radiation towards an unburnt area. Such heat radiation may cause the spread of fire to a next room and the difficulty in assuring a safe escape route.

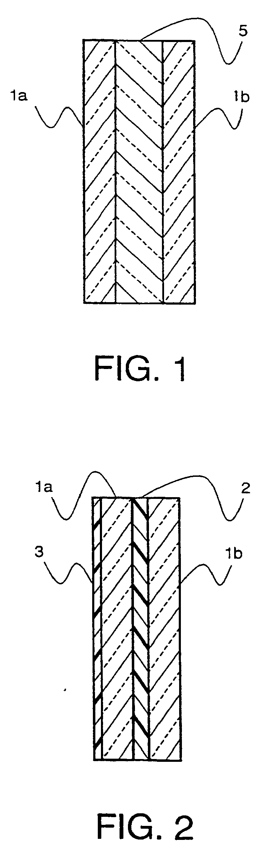

In order to shield the heat radiation, proposal has been made of a fire-protection glass product having a multilayer structure comprising two glass plates 1 a and 1 b with a gel layer 5 interposed therebetween as illustrated in Fig. 1. Upon occurrence of fire, the gel layer 5 foams, i.e., produces bubbles to exhibit a heat shielding characteristic.

However, the above-mentioned fire-protection glass product uses a large amount of a gel material so that a high material cost is required. In addition, since the above-mentioned glass product is large in thickness and heavy in weight, a high construction cost is also required. Moreover, upon occurrence of fire, the gel layer foams in several minutes to become opaque. This means that the function of assuring the inside view as the transparent window can not substantially be expected.

EP-A-0 398 291 and FR-A-2 293 566 describe a fire-resistance glass laminate comprising a plurality of fireproof glass plates, a resin intermediate layer and an infra-red (IR) reflecting layer.

GB-A-2 264 260 relates to a fire-resistant laminate comprising a plurality of fireproof glass plates, a resin intermediate layer and an IR reflecting layer. It is suggested to use a polycarbonate for the resin intermediate layer.

### Summary of the Invention:

It is therefore an object of the present invention to provide a fire-protection glass product which has both fireproof and heat shielding characteristics, which is light in weight and small in thickness to be easily equipped, and which does not require a gel layer.

According to one aspect of the present invention, a fire-protection glass product having a heat shielding characteristic comprises a plurality of fireproof glass plates, a resin intermediate layer interposed therebetween, and a heat-ray reflection film or IR reflection film formed on the surface of at least one of said glass plates. The heat-ray reflection film has a reflectance of 70% or more for a light of the wavelength of 2500nm and an average transmittance of 60% or more for visible rays.

At least one of the fireproof glass plates may be made of a heat-resistant transparent crystallized glass.

In the fire-protection glass product according to this invention, the heat-ray reflection film, which is transparent, is formed on one or both of opposite surfaces of at least one fireproof glass plates. With this structure, heat rays produced upon occurrence of fire are reflected by the heat-ray reflection film to suppress heat emission and to attenuate heat radiation to the next room. Furthermore, a resin material used as the intermediate layer is darkened by temperature rise upon occurrence of fire and absorbs the heat rays. At usual times, the fire-protection glass product of this invention serves as a safety glass by provision of the intermediate layer which prevents shattering or scattering of cracked glass pieces when the glass product is damaged or broken by collision or impact.

The heat-ray reflection film has a reflectance of 70% or more for a light of a wavelength of 2500nm. Upon occurrence of fire, the temperature of a burnt area falls within a range between 800°C and 900°C. At this time, an energy distribution of the heat ray radiated therefrom corresponds to a light of a wavelength of 2000 to 3000nm. If the heat-ray reflectance is 70% or more for a light of the wavelength of 2500nm, the heat-ray reflection film reflects the heat radiation upon occurrence of fire and sufficiently suppresses heat radiation into the unburnt area. On the other hand, if the heat-ray reflectance is 70% or less for a light of the wavelength of 2500nm, the heat-ray reflection film cannot substantially attenuate the heat radiation so that heat-shielding characteristic is insufficient. The heat-ray reflection film has such a spectral characteristic or a light selectivity that it has reflectance of 70% or more, 50% or more, and 80% or more for spectra lights of wavelengths of 2500nm, 1500nm and 3000nm, respectively.

The heat-ray reflection film has an average transmittance of 60% or more for visible rays (400nm to 700nm). If the average transmittance for the visible rays is less than 60%, light transparency of the film is so low so that a sufficient range of view or sight cannot be assured through the glass panel with the film. This deteriorates the function of the glass panel as a window. Preferably, the heat-ray reflection film has an average reflectance of 15% or less for visible rays.

As the heat-ray reflection film having the above-mentioned characteristics, use is most preferably made of an indium oxide film containing tin, an antimony oxide film containing tin, a tin oxide film containing fluoride, or a tin oxide film containing antimony. Alternatively, a ZnO-based transparent film can also be used. These films can be deposited on the glass plate by sputtering, spraying, dipping, or the like.

The heat-ray reflection film has a thickness between 1000Å and 15000Å. If the thickness is not greater than 1000Å, the heat-ray reflectance at the wavelength of 2500nm tends to fall within the range not greater than 70%. If the thickness is not smaller than 15000Å, the average transmittance for visible rays tends to fall within the range not greater than 60%.

As the fireproof glass plate, use may be made of a low-expansion crystallized glass, a borosilicate glass, a strengthened glass, and the like, alone or in combination. In particular, the low-expansion crystallized glass is preferable as the glass plate because it is resistant against the fire continuing for a longer time period and does not break even if it is spayed water by a sprinkler.

Upon occurrence of fire, the resin intermediate layer serves to absorb heat rays because the resin material is carbonized (blackened) by incomplete combustion. At normal times, the resin intermediate layer serves to assure the safety by preventing the release and the drop of the glass pieces when the glass plate is broken. As the resin material, use is made of fluorocarbon resin or polyethylene terephthalate resin.

In order to achieve a higher heat shielding characteristic, the fire-protection glass product may have a double-glazing structure including an additional glass plate attached through an air layer. The fireproof glass plate may be combined with a soda-lime glass plate.

Now, embodiments of this invention will be described in detail with reference to the drawing.

### Brief Description of the Drawings:

Fig. 1 is a sectional view of a conventional fire-protection glass panel having a gel layer;
Fig. 2 is a sectional view of a fire-protection glass panel according to an embodiment of this invention; and
Fig. 3 is a sectional view for describing a multilayer glass panel using the fire-protection glass panel illustrated in Fig. 2.

### Description of the Preferred Embodiments:

Description will now be made as regards embodiments of this invention with reference to the drawing.

As illustrated in Fig. 2, a fire-protection glass panel having a heat shielding characteristic comprises two fireproof glass plates 1a and 1b, a resin intermediate layer 2 interposed between the glass plates 1a and 1b, and a heat-ray reflection film 3 formed on an outer surface of the fireproof glass plate 1 a. The heat-ray reflection film 3 has a reflectance of 70% or more for a light of the wavelength of 2500nm and an average transmittance of 60% or more for visible rays.

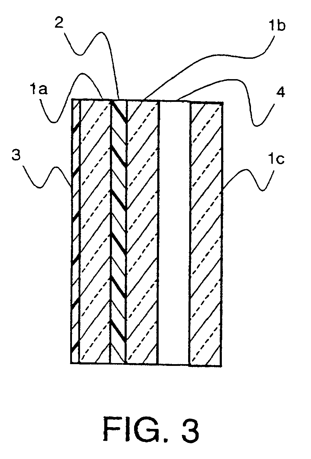

Referring to Fig. 3, a multi-layer glass panel comprises the fire-protection glass panel illustrated in Fig. 2 and an additional fireproof glass plate 1 c with an air layer 4 interposed therebetween. This structure achieves a higher heat shielding characteristic. The fireproof glass plate may be combined with a soda-lime glass plate.

Now, specific examples of the fire-protection glass panel of this invention will be described in detail together with comparative examples.

### Example 1

At first, preparation was made of two heat-resistant transparent crystallized glass plates (FIRELITE manufactured by Nippon Electric Glass Co., Ltd.) each of which has a dimension of 950 × 600 × 4mm and a thermal expansion coefficient of -5 × 10⁻⁷/°C.

Subsequently, an ITO (indium-tin oxide) film was deposited onto one surface of one of the glass plates by the use of a sputtering apparatus at a temperature of 350°C. The ITO film had a thickness of 4000Å.

Then, each glass plate was cut into a sample piece having a dimension of 900 × 600 × 4mm. Using the sample piece, the spectral characteristic of the glass plate after the above-mentioned deposition was measured by the use of a spectrophotometer. Herein, the reflectance was measured as a total internal reflectance using an integrating sphere while the transmittance was measured without using the integrating sphere.

As a result, the reflectance for a light of the wavelength of 2500nm was equal to 95% and the average transmittance for visible rays was equal to 81 %. Thus, these values were preferable as external appearance of the film.

Subsequently, as a resin intermediate layer, preparation was made of a fluorocarbon resin film comprising a copolymer containing 40 weight% of tetrafluoroethylene (TFE), 20 weight% of hexafluoropropylene (HFP), and 40 weight% of vinylidene fluoride (VDF) and having a chain molecular structure. The film had a thickness of 500 µm. The resin film was placed between the fireproof glass plates and subjected to thermo-compression bonding to obtain the fire-protection glass panel as illustrated in Fig. 2. The thermo-compression bonding was carried out by holding the resin film at a predetermined temperature for 15 minutes under a pressure of 1.27MPa.

### Example 2

Preparation was made of two tempered borosilicate glass plates having a dimension of 950×600×4mm, similar to that of Example 1.

Subsequently, one of the glass plates was heated by an electric furnace to a temperature of 600°C. Then, stannic chloride solution containing 1% antimony was applied onto one side surface of the above-mentioned glass plate by the use of a spraying device to deposit an antimony-containing tin oxide film. The tin oxide film thus obtained had a thickness of 2500Å.

In the manner similar to that mentioned in conjunction with Example 1, measurement was made of the spectral characteristic of the glass plate after the above-mentioned deposition. As a result, the reflectance for a light of the wavelength of 2500nm was equal to 78% and the average transmittance for visible rays was equal to 74%. These values were preferable as external appearance of the film.

Thereafter, as the resin intermediate layer, preparation was made of a polyethylene terephthalate resin film having a thickness of 200 µ m and having adhesive layers formed on opposite surfaces thereof. By the use of the resin film, the two glass plates were adhered to each other to obtain the fire-protection glass panel as illustrated in Fig. 2.

### Comparative Example

For the purpose of comparison, preparation was made of a tempered borosilicate glass plate similar to that in Example 2.

Then, in the manner similar to Examples mentioned above, measurement was made of the spectral characteristics of the glass plate. As a result, the reflectance for a light of the wavelength of 2500nm was equal to 7% and the average transmittance for visible rays was equal to 85%.

### Evaluation

Each sample of Examples 1 and 2 and Comparative Example was subjected to a heat-shielding test.

The heat-shielding test was performed in the following manner. At first, each sample was fixed to a frame at its end surfaces so as to avoid the end surfaces from being heated, and was arranged in front of a flat heating furnace. Then, the sample was heated in accordance with a standard heating curve provided in the Official Notification No.1125 of the Ministry of Construction of Japan. By the use of a heat flow sensor located at a distance of 0.5m from the center of an unheated surface of the sample, the maximum heat received thereat (W/cm²) was measured after lapse of 60 minutes. Those samples of Examples 1 and 2 were tested for a case A in which the heat-ray reflection film was positioned on a heated side or a side facing the heating side and a case B in which the heat-ray reflection film was positioned on the opposite or unheated side. The results are shown in Table 1.

**Table 1**

| | Example 1 | Example 2 | Comparative Example |
|---|---|---|---|
| Reflectance | | | |
| Average for Visible Rays | 12 | 19 | 6 |
| 1500nm | 60 | 55 | 6 |
| 2500nm | 95 | 78 | 7 |
| 3000nm | 98 | 83 | 7 |

| | | | |
|---|---|---|---|
| Transmittance | | | |
| Average for Visible Rays | 81 | 74 | 85 |
| 1500nm | 8 | 15 | 86 |
| 2500nm | 3 | 18 | 87 |
| 3000nm | 2 | 15 | 88 |

| | | | |
|---|---|---|---|
| Heat Received | | | |
| (W/cm²) | | | |
| Case A | 1.0 | 1.2 | 3.1 |
| Case B | 1.1 | 1.3 | - |

As is obvious from Table 1, each of the Examples exhibited the heat received as low as 1.0-1.3W/cm² after lapse of 60 minutes (925°C) after start of heating. Furthermore, each of the Examples was maintained for more than about 15 minutes after start of heating to allow the other side to be seen through it.

For a conventional fire-protection glass panel (manufactured and sold by SAINT-GOBAIN CERAMIQUES IND. (FRANCE) under the trade name of CONTRAFLAM) which comprises the gel layer 5 interposed between two glass plates 1 a and 1 b as illustrated in Fig. 1, the similar heat shielding test was performed. As a result, the heat received was sufficiently low but foaming of the gel layer 5 occured so that the other side can no longer be seen through it after lapse of about 4 minutes after start of heating.

In the fire-protection glass product according to this invention, the heat radiation upon occurrence of fire is reflected by the heat-ray reflection film and absorbed by blackening of the resin layer interposed between the glass plates. Therefore, the fire-protection glass product has high heat-shielding characteristic. This suppresses the probability of combustion or ignition of matters present in a room adjacent to the fired room to thereby prevent the spread of fire. In addition, it is possible to assure a safe escape route upon occurrence of fire. Furthermore, since the light transparency can be maintained for a predetermined time duration, the status of fire can be visually confirmed to thereby facilitate lifesaving and fire fighting. Moreover, the fire-protection glass product according to this invention is thin in thickness, light in weight, and low in construction cost and is therefore advantageously used as a building material.

## Claims

1. A fire-protection glass product having a heat shielding characteristic, comprising:
- a plurality of fireproof glass plates;
- a resin intermediate layer interposed between adjacent ones of said glass plates and made of a material selected from fluorocarbon resin and polyethylene terephthalate resin; and
- a heat-ray reflection film formed on the surface of at least one of said glass plates and having a thickness between 1000Å and 15000Å and a reflectance of 70% or more for a light of the wavelength of 2500nm and an average transmittance of 60% or more for visible rays.

2. A fire-protection glass product as claimed in claim 1, wherein at least one of said fireproof glass plates is made of a heat-resistant transparent crystallized glass.

3. A fire-protection glass product as claimed in claim 1, wherein said heat-ray reflection film is formed on at least one of opposite surfaces of said fireproof glass plates.

4. A fire-protection glass product as claimed in claim 1, wherein said heat-ray reflection film is made of a material selected from indium oxide containing tin, antimony oxide containing tin, tin oxide containing fluorine, and tin oxide containing antimony.

5. A fire-protection glass product as claimed in claim 1, wherein said heat-ray reflection film has a reflectance of 50% or more for a light of a wavelength of 1500nm and 80% or more for a light of a wavelength of 3000nm, and an average reflectance of 15% or less for visible rays.

6. A fire-protection glass product as claimed in claim 1, said glass product having a double-glazing structure including an additional glass plate attached through an air layer.

## Patentansprüche

1. Feuerschutzglasprodukt, das ein Hitzeabschirmungsmerkmal aufweist, umfassend:
- eine Vielzahl von feuerfesten Glasplatten;
- eine Harzzwischenschicht, die zwischen benachbarten Glasplatten angeordnet und aus einem Material gefertigt ist, das aus Fluorkohlenstoffharz und Polyethylenterephthalatharz ausgewählt ist; und
- ein Hitzestrahlenreflexionsfilm, der auf der Oberfläche von wenigstens einer der Glasplatten ausgebildet ist und eine Dicke zwischen 1000 Å und 15000 Å und einen Reflexionsgrad von 70 % oder mehr für ein Licht der Wellenlänge von 2500 nm und eine mittlere Durchlässigkeit von 60 % oder mehr für sichtbare Strahlen aufweist.

2. Feuerschutzglasprodukt nach Anspruch 1, wobei wenigstens eine der feuerfesten Glasplatten aus einem hitzebeständigen transparenten kristallisierten Glas gefertigt ist.

3. Feuerschutzglasprodukt nach Anspruch 1, wobei der Hitzestrahlenreflexionsfilm auf wenigstens einer der sich gegenüber liegenden Oberflächen der feuerfesten Glasplatten ausgebildet ist.

4. Feuerschutzglasprodukt nach Anspruch 1, wobei der Hitzestrahlenreflexionsfilm aus einem Material gefertigt ist, das aus Indiumoxid, das Zinn enthält, aus Antimonoxid, das Zinn enthält, aus Zinnoxid, das Fluor enthält, und aus Zinnoxid, das Antimon enthält, ausgewählt ist.

5. Feuerschutzglasprodukt nach Anspruch 1, wobei der Hitzestrahlenreflexionsfilm einen Reflexionsgrad von 50 % oder mehr für ein Licht einer Wellenlänge von 1500 nm und 80 % oder mehr für ein Licht einer Wellenlänge von 3000 nm und einen mittleren Reflexionsgrad von 15 % oder weniger für sichtbare Strahlen aufweist.

6. Feuerschutzglasprodukt nach Anspruch 1, wobei das Glasprodukt eine Doppelverglasungsstruktur aufweist, die eine zusätzliche Glasplatte beinhaltet, die über eine Luftschicht angefügt ist.

## Revendications

1. Produit de verre protecteur contre le feu ayant des caractéristiques de protection thermique comprenant :
- une pluralité de plaques de verre réfractaire ;
- une couche intermédiaire de résine intercalée entre les plaques de verre adjacentes et réalisée en un matériau sélectionné à partir de résine de fluorocarbure et de résine de polyéthylène téréphtalate et
- une pellicule réflectrice de rayonnement thermique formée à la surface d'au moins une des plaques de verre et ayant une épaisseur comprise entre 1000Å et 15000Å et un facteur de réflexion de 70% ou plus pour une lumière d'une longueur d'onde de 2500nm, et un facteur de transmission moyen de 60% ou plus pour les rayonnements visibles.

2. Produit de verre protecteur contre le feu selon la revendication 1, dans lequel au moins une des plaques de verre réfractaire est en verre cristallisé transparent résistant à la chaleur.

3. Produit de verre protecteur contre le feu selon la revendication 1, dans lequel la pellicule réflectrice de rayonnement thermique est formée sur au moins une des surfaces opposées des plaques de verre réfractaire.

4. Produit de verre protecteur contre le feu selon la revendication 1, dans lequel la pellicule réflectrice de rayonnement thermique est en matériau sélectionné à partir d'oxyde d'indium contenant de l'étain, d'oxyde antimonique contenant de l'étain, d'oxyde d'étain contenant de la fluorine et d'oxyde d'étain contenant de l'antimoine.

5. Produit de verre protecteur contre le feu selon la revendication 1, dans lequel la pellicule réflectrice de rayonnement thermique a un facteur de réflexion de 50% ou plus pour une lumière d'une longueur d'onde de 1500nm et de 80% ou plus pour une lumière d'une longueur d'onde de 3000nm et un facteur de réflexion moyen de 15% ou moins pour le rayonnement visible.

6. Produit de verre protecteur contre le feu selon la revendication 1, le produit de verre ayant une structure en double vitrage comprenant une plaque de verre supplémentaire rattachée par une couche d'air.
